# EUROPEAN PATENT APPLICATION

(11) **EP 4 600 542 A1**
(43) Date of publication of application: **13.08.2025**
(21) Application number: 25156867.1
(22) Date of filing: 10.02.2025
(51) Int. Cl.: F17C 3/04

(54) **STORAGE CONTAINER, METHOD OF MANUFACTURING THEREOF, AND USE THEREOF**

(30) Priority: 08.02.2024 EP 24156702
(71) Applicant: PRTC NV, 2830 Tisselt (BE)
(72) Inventor: ABDUL-KADER, Oras, 9100 Sint Niklaas (BE)
(74) Representative: Etex Services NV - Etex IPSC

(57) **Abstract**

The storage container provided with a container wall (10) comprising polymer material (52) in which an inorganic filler is present, characterized in that a microporous granulate (51) is present as a filler. 12. Said polymer material (52) embedding the microporous granulate (51) is at an outer side of the container wall (10). It may be applied by providing a semi-manufactured storage container provided with at least one polymer layer (15); arranging a cavity around said semi-manufactured storage container (10); inserting the microporous granulate (51) into said cavity, and applying the polymer material (52) or a precursor thereof into the cavity, therewith embedding the microporous granulate (51) into the polymer material (52).

## Description

### FIELD OF THE INVENTION

The invention relates to a storage container provided with a container wall comprising polymer material in which an inorganic particulate filler is present, which storage container is particularly a cryogenic tank. The invention further relates to a method of manufacturing such a storage container.

The invention also relates to the use of the storage container as a cryogenic tank.

### BACKGROUND OF THE INVENTION

Cryogenic storage containers - also referred to as cryogenic tanks - of polymer material have been under development for a significant period of time. There is clearly a considerable commercial interest in such cryogenic tanks, for instance for storage of liquid nitrogen, hydrogen and other materials of which the boiling point is well below 0°C. However, such storage requires that the container wall is well-closed, that that no material therein can leak out of the cryogenic tank, which is anyhow not desired, but could moreover easily lead to an explosion. Furthermore, properties of polymers depend on the temperature. At cryogenic temperatures, most if not all polymer materials are in the semi-crystalline glassy state and have a tendency to become brittle. Some of the engineering materials widely used at ambient temperature, turn out less suitable for cryogenic temperatures. Certain fluoropolymers, so-called Ultrahigh molecular weight polyethylene (UHWPE) and epoxy are examples among the polymer materials considered useable at cryogenic temperatures. Particulate fillers and fibers may be added to the polymer material to improve or modify its properties. However, such particulate fillers may have an effect on viscosity and other processing properties.

Such cryogenic tanks are known from a variety of patent applications. WO2022189470A1 discloses a tank comprising a fibrous preform, which is impregnated at its outside with polymer and having an internal layer. WO2023048073A1 proposes a cryogenic tank with a middle layer of ethylene vinyl alcohol copolymer. USS2023/0122936A1 proposes the incorporation of hollow fibers through which a liquid could run for insulation purposes. EP3984734 discloses a cryogenic tank comprising 1st and 2nd carbon fiber layers. WO2022/112694A1 discloses a cryogenic tank with a sealing layer, preferably a fluoropolymer, and a composite reinforcing layer comprising continuous fibres impregnated with a polymer. Herein, it is indicated that there may be an insulating layer, for instance on the basis of mineral wool, and possibly using a metal layer.

The insulating layer foreseen in WO2022/112694A1 however is arranged externally to the cryogenic tank. Although this has the advantage that the insulation layer can be pure rather than a composite, it is deemed disadvantageous that such layer is arranged separately. This is typically done during or after installation, which requires extra labour force. Moreover, an external assembly has the implicit risk that gaps may remain. Heat can enter the cryogenic tank via such gaps, leading to local differences in temperature and the possibility of tensions and local weakening of the tank. It is therefore desired to provide a cryogenic tank that comprises some insulation as a part of the container wall. More in general, it appears desired to provide a storage container - also referred to as tank - that comprises some insulation as part of the container wall. Such storage container may also be applied at other conditions than at cryogenic conditions.

### SUMMARY OF THE INVENTION

It is therefore an object of the invention to provide a storage container, especially but not exclusively a cryogenic tank, which includes an insulation.

It is a further object of the invention to provide a method of manufacturing such a storage container. According to a first aspect of the invention, a storage container is provided, said storage container having a container wall comprising polymer material in which an inorganic filler is present, characterized in that a microporous granulate is present as a filler.

According to a second aspect of the invention, a method of manufacturing a storage container is provided, particularly a storage container in accordance with the invention, comprising the steps of arranging a polymer material embedding a microporous material as a part of a container wall. According to a third aspect of the invention, the use of such storage container or a storage container manufactured in accordance with the invention, as a cryogenic tank, is provided.

Microporous materials are known for their low thermal conductivity at a wide range of temperatures up to 1000°C and higher. Due to their inorganic nature, these microporous materials have furthermore an excellent stability at low temperatures, i.e. well below 0°C. However, a typical form of a microporous material is pyrogenic silica, which is also known as fumed silica. This material is a common additive to polymer materials and compositions as a thixotropic additive, increasing the viscosity. Hence, in its particulate form, the maximum content of microporous material is limited, in view of the necessary processing properties of the filled polymer. Granulates, however, have a significantly lower external surface area per unit of weight than particulate filler. This smaller external surface area offers the advantage that more insulating material can be integrated. In this manner, an insulation layer can be created that constitutes part of the container wall.

Advantageously, the microporous material comprises an insulation powder chosen from the group of alumina and silica. These materials are known for their chemical stability and may be provided in a form that includes micropores. Typically, micropores exists within aggregates formed by cohesion of primary particles. Such cohesion is some non-chemical bonding, generally surviving handling. Pyrogenic silica, precipitated silica, pyrogenic alumina and aerogels, such as silica aerogels, are among the best microporous materials. They are usually combined with an opacifier material, and optionally a filler. While precipitated silica does not have high temperature stability, this seems less of a concern for tanks, especially cryogenic tanks.

In one preferred embodiment, at least 50% by weight of the insulation powder is chosen from the group selected from pyrogenic silica, pyrogenic alumina or combinations thereof. Preferably, at least 80% by weight of the insulation powder is chosen from the group selected from pyrogenic silica, pyrogenic alumina or combinations thereof. Hence, the insulation powder is preferably a pyrogenic powder instead of an aerogel. Moreover, the amount of non-pyrogenic forms of silica or alumina, such as precipitated silica, microsilica and silica fuse, is at most 50% by weight, and preferably at most 20% by weight. Such non-pyrogenic forms of silica may be suitable for products intended for use at lower temperatures, for instance up to 300-C, but the insulation performance quickly deteriorates upon heating. When the amount of non-pyrogenic forms of silica and alumina is at most 20%, insulation performance can be preserved. In such case, thermal conductivity will increase, but generally less than 10% increase. The temperature limit, i.e. the maximum temperature at which the material may be used without significant deterioration is comparable. Of all non-pyrogenic forms of silica, precipitated silica is most preferred, since it has a comparatively large specific surface area and presence of micropores is assumed. Preferably, at least 90% by weight of the insulation powder is chosen from the group of pyrogenic silica, pyrogenic alumina or combinations thereof. Pyrogenic silica is the name for pyrogenically prepared silicic acids. Alumina, if used, is preferably prepared analogously.

In a preferred implementation, the insulation powder is pyrogenic silica. It is for instance present in an amount of 30 to 90 weight percent, and preferably 40 to 80 weight percent, based on total dry weight of the microporous powder composition. Pyrogenic silica is the name for pyrogenically prepared silicic acids and may include for instance silicic acid, precipitated low-alkali silicic acids, silicon dioxide aerogels. Alumina, if used, is preferably prepared analogously. Microporous powder compositions comprising pyrogenic silica may have a temperature stability up to 1000oC, and have been found appropriate for granulation. If a temperature stability to higher temperatures would be desired, alumina is to be added or used. Particle sizes of the insulation powder is for instance between 2 and 300 nanometers, with a particle size between 4 and 100 nm being more common and a particle size between 4 and 20 nm most common.

In another embodiment, the insulation powder comprises or is a silica aerogel material. Such silica aerogel material may be hydrophobic. Such material is for instance prepared in the manner disclosed in WO2016/054254A2, which is included by reference. While a variety of aerogel materials exist, a silica aerogel (in said patent application referred to as an aerogel composition comprising a silica-based framework) is beneficial for its insulating value. However, its thermal stability is limited.

Opacifiers for use in microporous material are known, and for instance include titanium oxide, ilmenite, iron (II), iron (III) mixed oxides, chromium dioxide, zirconium oxide, manganese oxide, iron oxide, aluminium oxide, zirconium silicate, silicon carbide. Silicon carbide and titanium oxide (rutile) are preferred opacifiers.

In one further implementation, the microporous material is free from reinforcing fibers. may further comprise a reinforcing fiber. Such fibers are conventionally used to strengthen panel- or block-shape type insulation products. However, in case that the microporous material is used in granules, such as made by dry granulation using roller-compaction, the addition of fibers into the microporous material is not desired, as it may interfere with the processing, and hence the microporous material is preferably free from such fibers.

In again a further implementation, the microporous material further comprises a filler. Such fillers are for instance silica-based or calcium silicate-based materials, such as vermiculite, perlite, flyash, volatilized silica as known from WO2006/097668A1. A further filler material may be gypsum material, such as described in the non-prepublished application EP23166012.7, which is included herein by reference. The use of such fillers has been found to have little effect on thermal conductivity at temperatures of 400°C, and even less at lower temperatures, such as below room temperature or below freezing point (lower than 0°C).

In one implementation, the microporous material comprises the opacifier in an amount of 10-50 wt%, the insulation powder in an amount of 40-80wt% and said filler in an amount of 0-50 wt%. This has been observed to provide an acceptable powder composition for granulation. More preferably, the microporous material comprises the opacifier in an amount of 15-35 wt%, the insulation powder in an amount of 40-80wt% and a filler in an amount of 0-20 wt%. The microporous material is generally a powder composition that is free of any binder material.

Generally, granules have a size in the range of 0.15 to 2.0 mm. In one implementation, the granularity is tuned, for instance by sieving. One preferred size range is for instance in the range up to 0.5 mm or up to 1.0 mm, and starting at 0.25 mm or below. Reducing the maximum size and the size distribution width may facilitate mxing with other fillers.

In again a further implementation, the granulate or its insulation powder is hydrophobic. This is deemed beneficial for the incorporation of the microporous granulate into an (organic) polymer material. Not merely does the hydrophobicity assist in mixing, but also does it prevent water or another solvent to enter the microporous material. That would easily lead to deterioration of the micropores, leading to degradation of insulation performance. Hydrophobic insulation powders, such as hydrophobic forms of pyrogenic silica are commercially available, for instance from Evonik Degussa as Aerosil R974. Hydrophobicity may alternatively be obtained by adding a hydrophobic agent into the microporous material during mixing thereof. Examples of such hydrophobic agents are siloxanes and the like. Granules may further be rendered hydrophobic, as specified in WO2018134275Al.

In another implementation, the granulate may be provided with a coating, serving to improve miscibility with the organic polymer material. The coating is preferably an organic coating, such as an organic polymer. One form of an organic polymer is for instance a silicone polymer, such as polydimethylsiloxane (PDMS). In a preferred implementation such silicone polymer is applied onto the granulate that has undergone a treatment with waterglass. Such treatment with waterglass after the formation of the granulate is described in the non-prepublished application EP23166028.3, which is included herein by reference. The waterglass may constitute a surface onto which the silicone polymer adheres without significant penetration of the microporous material. It is not excluded that the silicone polymer is applied as a dispersion further comprising waterglass. While it is not deemed necessary, the coating is in one implementation applied on a granulate prepared with hydrophobic insulation powder.

Preferably, the amount of granules in the polymer material is at least 5% by weight, more preferably at least 10% by weight. Levels of up to 25% by weight appear feasible without tremendous impact on processing properties. The level may further depend on the miscibility of the granules into the polymer material, which may be optimized by means of hydrophobic agents (and their choice relative to the chosen polymer material), and/or coatings. However, when the polymer material would be applied subsequent to application of the granules, higher levels than 25% by weight are deemed feasible.

The polymer material in which the granulate is embedded may be chosen from the various options for low temperature polymers. Examples include thermoset materials such as epoxies; radical polymers such as polyolefines and fluoropolymers, particularly with a high weight such as UHWPE; thermoplast polymers such as polyimides and polyurethanes. A review of polymers for cryogenic applications, is for instance given in Duo Chen et al, Polymers 13 (2021), 320. An overview of cryogenic properties of polymer materials is given in S. Kalia and S.Y Fu, Polymers at Cryogenic Temperatures, (Springer 2013), Chapter 2, pp. 9-39. As any other filler, the granulate may herein disturb regular arrangement of polymers and therewith counteract growth of crystallites.

In a further implementation, the filled polymer material further comprises non-granulated microporous material. This may be beneficial for viscosity and processing properties. The amount hereof is preferably at most 5% by weight, more preferably at most 4% by weight or even at most 3% by weight.

In another embodiment, the polymer material further comprises a granulate of calcium silicate or calcium silicate based material. The presence of additional granulates of calcium silicate material is deemed beneficial so as to increase the level of granulates in the polymer material. This holds especially when the granulates are embedded (or compounded) into the polymer material prior to the application of the filled polymer material onto the container wall, or as a first layer within a mould during injection moulding, transfer moulding or like manufacturing technique. Moreover, and not less important, the presence of calcium silicate granules is deemed advantages for sake of fire protection. Calcium silicate is an excellent fire protection material. This helps to maintain the integrity of the tank in case of any fire in the vicinity of the tank. A specific type of calcium silicate is xonotlite, which may be prepared in the form of porous crystalline particles. Such particles are commercially available from Promat International NV under the tradename Promaxon^{®}. The level of calcium silicate granules may for instance be in the range up to 50% by weight, for instance in the range of 10-30% by weight. This subrange of 10-30% by weight appears an optimum as to effectiveness as a fire retardant and limited impact on the processing properties of the polymer material.

Preferably, the container wall comprises a first layer and a second layer, wherein said first layer is arranged at an outer side of said second layer, and wherein the first layer comprises the microporous granulate. This seems preferable for sake of manufacturing, but also to protect the second layer against any heat coming from outside. More preferably, the second layer comprises reinforcement fiber and is preferably free of microporous granulate. This prevents that the granulate would interfere with the reinforcement fibers, resulting in less strength. The reinforcement fibers are for instance carbon fibers. WO2022/112694A1 mentions several options for specific designs.

In one embodiment, the tank of the present invention is manufactured by embedding the granulate into the polymer material before the application of the filled polymer material. This first option has the advantage that this facilitates the application of the filled polymer material in accordance with common application techniques, such as moulding, coating, spraying, printing and so on. Furthermore, the application can be combined with the application of any other polymer layer in the container wall.

The resulting tank is preferably used as part of a system comprising a further insulation product. Such a further insulation product may be any conventional insulation product that is wrapped around the tank. Such insulation products are known as battens, insulation blankets and flexible panels. Examples of appropriate insulation materials include microporous insulation, calcium silicate based insulation and mineral wool products. Preferred insulation materials for a first shell around the tank is a microporous insulation material.

In another embodiment, the tank of the present invention is manufactured by embedding the granulate into the polymer material after its application. Herein the granulate is applied onto a surface of the container wall - or better a semi-manufactured container wall product. Thereafter, the polymer material is applied over the granulate, therewith embedding the granulate. This has the advantage that the granulate does not have an impact on the processing properties of the polymer material. As a consequence, the filling level may be increased, which is beneficial for the insulation performance.

In order to apply the granulates onto the semi-manufactured container wall product, an adhesion promotor or adhesive layer may be applied. The provision thereof onto the surface of the container wall product is deemed most straightforward. The adhesive or adhesion promotor may be dissolved into or mixed with the polymer material after its application.

In another implementation, the granulate may be applied within a cavity. Such a cavity may be formed by inserting the semi-manufactured container wall product into a chamber or vice versa by arranging the chamber wall around the semi-manufactured container wall product. In one implementation, such a chamber is a mold. In another implementation, such a chamber is a metal casing that may or may not remain part of the resulting product. In a further implementation, such a chamber may be a removable casing. In again a further implementation, such a chamber may be a textile mesh, non-woven textile layer or woven textile layer, optionally providing with a protective film or foil at its outside. It could further be transparent to radiation, such as glass or the like. The chamber may be cylindrical and open at both terminal ends. Alternatively, the chamber may be cylindrical and closed at one terminal end, with an aperture for filling the cavity from the other end. It is not excluded that the chamber is entirely closed, with incorporated feeds for the granulates and for the polymer material. By applying the granulate into the cavity, the cavity may be filled up with granules. The polymer is then to fill openings around the granules, so as to act as a binder for the granules, and to ensure appropriate adhesion to the underlying semi-manufactured container wall product. In this embodiment, the application of an adhesion promotor or adhesive on a surface of the semi-manufactured container wall product is an option. Rather than that the polymer material is provided as such, it may be applied in the form of a precursor. The polymer material is then formed after its application by means of curing. The use of such precursor is well-known in the field of coatings and polymers, and may include monomers, prepolymers, two-component systems and the like. The curing may also involve crosslinking. Herein, UV-irradiation may be used. If needed, a drying step may be performed.

Any embodiment and implementation discussed in the foregoing applies to any and all of the aspects specified above. While the foregoing has been generated for developmemts focusing on cryogenic tanks, the resulting technology as elaborated hereinabove may also be applicable and advantageous for other tanks. Any weight percentage (wt% or % by weight) of the granulate refers to the total weight of the filled polymer material. In the even that the container wall comprises several layers, the filled polymer material refers to the specific layer in which the granulate is embedded. The term granulate is herein used as an amount or a set of individual granules. In case that the term 'granulate' is used whereas reference to an individual granule would be more appropriate, it will be understood that the skilled person corrects so where necessary.

### BRIEF INTRODUCTION OF THE FIGURES

These and other aspects of the storage container and the method of the invention will be further elucidated with reference to the Figures, which are not drawn to scale and purely diagrammatically, and wherein equal reference numerals in different Figures refer to equal or corresponding parts, wherein:
Fig. 1 shows schematically a storage container in a bird's eye perspective;
Fig. 2 shows a cross-sectional view of the storage container through the container wall;
Fig. 3(a)-3(c) show three consecutive steps in one embodiment of the method according to the invention.

### DETAILED DESCRIPTION OF ILLUSTRATED EMBODIMENTS

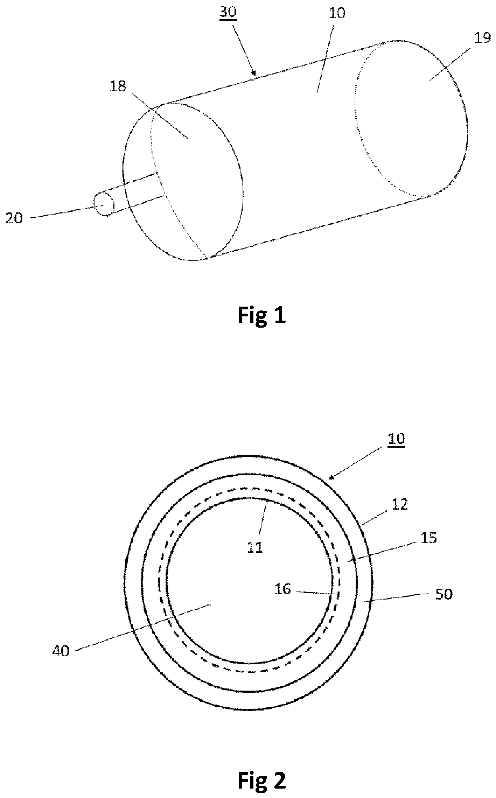

Fig. 1 shows a schematical view of a storage container 30. The storage container 30 is provided with a first end 18 and a second end 19, in between of which a container wall 10 extends. This container wall 10 is composed of polymer material in one or more layers, as further shown in Fig. 2. The container wall 10 typically is continuous and extends onto the first end 18 and the second end 19, as known to the skilled person. On the first end 18, an opening 20 is arranged, through which the storage container 30 may be filled and unfilled. While not shown, it is not excluded that more than one opening is present, for instance on the second end 19.

As is clearly seen in Fig. 1, a storage container 30 has a first and second end 18, 19. In order to obtain adequate insulation of the storage container 30, it is not sufficient to apply an external roll, blanket or batten of insulation material around the container wall 10. The first and second end 18, 19 need to be insulated as well. This applies to storage containers 30 in general, since the first ends 18, 19 may be the mechanically weaker areas due to their changing curvature. Moreover, the opening 20 is a sensitive part for variations in temperature and any resulting risk of evaporation, leakage or clogging. The risk of evaporation would exist at low temperatures, such as cryogenic conditions, due to - uncontrolled - heating up. The risk of clogging would occur at higher temperatures, for instance due to cooling down and resulting effects on viscosity and on homogeneity of a dispersion and/or adhesion to the surface of some ingredients.

Fig. 2 shows in cross-sectional view the storage container of the invention, and more particularly the container wall 10 surrounding an interior 40 of the storage container. The container wall 10 is provided with an inner side or surface 11 and an outer side or surface 12. Such a container wall preferably comprises polymer material, and typically comprises a main layer 15 (in the claims referred to as the second layer), and an inner liner 16. The main layer 15 may be a laminate of several sublayers. It seems generally preferable that the main layer 15 is provided with reinforcement, typically by addition of fibers. For cryogenic tanks, the use of carbon fibers as reinforcement of the main layer 15 seems preferable. The inner liner 16 is for instance a fluoropolymer. Specific examples and embodiments are disclosed in the patent documents cited in the background section, such as WO2022/112691A1, which is herein included by reference.

In accordance with the invention, the container wall 10 comprises a further layer 50 at its outer side 12. This further layer 50 (in the claims referred to as the first layer) comprises a microporous granulate as a filler. The further layer 50 may additionally comprise further granulates, such as a calcium silicate granulate and especially a granulate of synthetic forms of calcium silicate such as synthetic xonotlite. This material is commercially available from Promat International under the trade name Promaxon^{®}. The presence in the form of a granulate is preferred in order to obtain adequate mixing with the microporous granulate and within the further layer 50. The microporous granulate and any other granulate preferably is treated to be hydrophobic, for instance by using hydrophobic ingredients, and especially hydrophobic pyrogenic silica such as commercially available from Evonik under the tradename Aerosil R974. Alternatively, the microporous granulate may be rendered hydrophobic by adding a hydrophobic agent to the composition of the microporous material, and/or by performing a hydrophobation treatment after preparation of the granules. Alternatively or additionally, the granules may be coated with an organic coating, such as a silicone coating. This however is a more complicated treatment. The polymer may be chosen in dependence of processing properties at the application temperature, for instance at ambient temperature or even above ambient temperature, and in dependence of the operation temperature of the storage container. The choice of the polymer material may further depend on the polymer layer used for the main layer 15. If the polymer of the main layer 15 would be an epoxy material, an epoxy may be used for the further layer 50. If the polymer of the main layer 15 would be a polyolefin or a fluoropolymer, then the further layer 50 may comprise such polyolefin, a fluoropolymer or any other material compatible therewith. However, use of thermoplastics such as polyurethane or polyimide is not excluded. It is not excluded that the material of the further layer 50 would contain further fillers, which are preferably inorganic insulating particulate fillers. In fact, it is an advantage of the invention that the microporous insulation can be added in a form, which will have less impact on the processing properties of the polymer material due to its significantly reduced external surface area as compared to particulate fillers.

It is an advantage of the invention that the container wall 10 herewith is provided with a layer of insulation. This insulation will typically also extend to the first end 18 and the second end 19. This makes that not only the outer surface 12 of the container wall 10 is provided with insulation, such as by application of an external panel, blanket or batten. Any area that is covered less easily with such conventional external insulation material is still insulated. Furthermore, this provides additional safety. In case that by errors during assembly or any unexpected changes during the lifetime of the storage container, part of the external insulation material would be moved or damaged to locallyr reduce the insulation performance of the external insulation material, the insulation material of this further layer 50 remains.

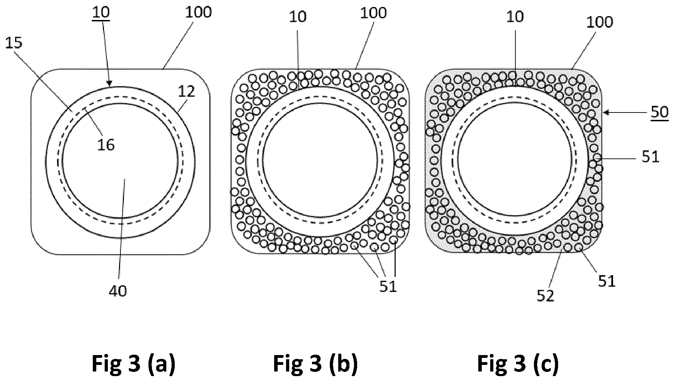

Fig. 3(a)-3(c) discloses three stages of an embodiment of the method of the invention. In this embodiment, rather than embedding or compounding the granulate into the polymer material prior to its application, the granulate is applied first, followed by the polymer material that will embed the granulate.

Fig. 3(a) shows that the storage container 10 is placed within a box or chamber 100. The material of such box or chamber may be various, including metal, glass, textile, foil, polymer, such as rigid acrylate. The box or chamber 100 may further be any mold for injection or transfer moulding. In the event that removal of the box or chamber 100 after its filling is foreseen, the box or chamber may be provided on its inner side with a coating to which the polymer material would not or not significantly adhere. Such coatings are known per se and can be selected by the skilled person on the basis of his common general knowledge. While the chamber or box 100 is herein shown to be rectangular with rounded off edges, this is not deemed necessary. In fact, a shape significantly corresponding to the shape of the storage container 30 may be preferred, so as to ensure that the resulting further layer 50 has a uniform thickness. Alternatively, the box or chamber may be chosen to arrange that the further layer 50 has a non-uniform thickness, for instance in that the thickness at the first end 18 and/or second end 19 would be larger than the thickness at the - typically - cylindrical portion of the container wall 10. For sake of clarity, the container wall 10 and the storage container in its entirety are in Fig. 3a in a state of a semi-manufactured product. It is not excluded that an adhesion layer or adhesion promotor is applied at the outer surface 12. A layer of the polymer material used for the microporous granulate and optionally further comprising microporous granulate may also be used as such an adhesion layer. If any granulate is present in such adhesion layer, a median size of the granulate does not need to be equal to that of the granulate to be inserted subsequently in a cavity between the box 100 and the container wall 10. Rather, in one preferred implementation, the median size of the granulate in such adhesion layer may be smaller.

Fig. 3(b) shows the situation after inserting a granulate 51 into a cavity between the box 100 and the container wall 10. While Figure 3b shows a uniform granule size, it will be clear that this is merely for sake of representation. Furthermore, the size of the granulate is not in scale with the size of the storage container 10. It is apparent from this Fig 3(b) that a decent filling degree can be achieved with the granulate. While the granulate 51 is preferably a microporous granulate in accordance with the invention, it is not excluded that the microporous granulate would be mixed with a further granulate, which would preferably have a mean granule size corresponding to that of the microporous granulate (i.e. equal or similar within a margin of tolerance so as to achieve adequate mixing of the granulates).

Fig. 3(c) shows the situation after adding a polymer 52 into the cavity, and therewith between and around the granules 51. Therewith the further layer 50 gets formed. As will be understood, such polymer 52 may be added in any appropriate, typically liquid form, as a dispersion, melt, solution, and furthermore as a prepolymer or even as reactive monomer. Optionally, the polymer 52 may be subjected to a curing treatment as known to the skilled person. When desired, the box 100 can subsequently be removed. It is not excluded that a further protection layer would be applied after such removal of the box. If there would be any portion of the granulate 51 that is not fully covered by polymer 52, due to its location at the box 100, a protection layer will ensure full encapsulation. The container wall 10 is herewith ready. The container may thereafter be provided with any external insulation layer. Such external insulation layer may again be a insulation comprising microporous material, or may be an alternative insulation material.

## Claims

1. A storage container provided with a container wall comprising polymer material in which an inorganic filler is present, **characterized in that** a microporous granulate is present as a filler.

2. The storage container as claimed in claim 1, wherein the microporous granulate comprises a microporous material comprising an insulation powder chosen from the group of silica and alumina.

3. The storage container as claimed in claim 2, wherein the insulation powder is chosen from the group of aerogels, pyrogenic silica, pyrogenic alumina and mixtures thereof, and preferably is pyrogenic silica.

4. The storage container as claimed in claim 3, wherein the microporous material further comprises a supplementary silica or silicate material chosen from the group of precipitated silica, fused silica, microsilica, calcium silicate, perlite, vermiculite.

5. The storage container as claimed in any of the preceding claims, wherein the microporous granulate and/or its insulation powder is hydrophobic.

6. The storage container as claimed in any of the preceding claims, wherein the microporous granulate is provided with an organic coating, preferably a polymer coating.

7. The storage container as claimed in any of the preceding claims, wherein the container wall comprises a first layer and a second layer, wherein said first layer is arranged at an outer side of said second layer, and wherein the first layer comprises the microporous granulate.

8. The storage container as claimed in claim 7, wherein the second layer comprises reinforcement fiber and is preferably free of microporous granulate.

9. The storage container as claimed in any of the preceding claims, wherein the microporous granulate is present in an amount of at least 5% by weight, preferably at least 10% by weight, based on the total weight of the filled polymer material.

10. The storage container as claimed in any of the preceding claims, wherein the filled polymer material further comprises non-granulated microporous material.

11. The storage container as claimed in any of the preceding claims, wherein the polymer material further comprises a granulate of calcium silicate or calcium silicate based material.

12. A method of manufacturing a storage container, particularly as claimed in any of the preceding claims, comprising the steps of arranging a polymer material embedding a microporous granulate as a part of a container wall.

13. The method as claimed in claim 12, wherein the said polymer material embedding a microporous granulate is at an outer side of the container wall.

14. The method as claimed in claim 12 or 13, wherein the method comprises the steps of:
- providing a semi-manufactured storage container provided with at least one polymer layer;
- arranging a cavity around said semi-manufactured storage container;
- inserting the microporous granulate into said cavity, and
- applying the polymer material or a precursor thereof into the cavity, therewith embedding the microporous granulate into the polymer material,
- optionally curing said polymer material or its precursor, and
- preferably removing the cavity.

15. Use of the storage container as claimed in any of the claims 1-11 or the storage container obtained in accordance with the claims 12-14 as a cryogenic tank.
